(19) Europäisches Patentamt / European Patent Office / Office européen des brevets

(11) **EP 1 839 011 B1**

(12) **EUROPÄISCHE PATENTSCHRIFT**

(45) Veröffentlichungstag und Bekanntmachung des Hinweises auf die Patenterteilung:
**11.11.2015 Patentblatt 2015/46**

(51) Int Cl.:
*G01B 7/008* *(2006.01)*   *G01B 11/00* *(2006.01)*
*G01B 21/04* *(2006.01)*

(21) Anmeldenummer: **06706171.3**

(22) Anmeldetag: **05.01.2006**

(86) Internationale Anmeldenummer:
**PCT/EP2006/000065**

(87) Internationale Veröffentlichungsnummer:
**WO 2006/077018 (27.07.2006 Gazette 2006/30)**

(54) **VERFAHREN ZUM BESTIMMEN EINER RAUMKOORDINATE EINES MESSPUNKTES AN EINEM MESSOBJEKT SOWIE ENTSPRECHENDES KOORDINATENMESSGERÄT**

METHOD FOR DETERMINING A SPACE COORDINATE OF A MEASURING POINT ON A TEST OBJECT AND CORRESPONDING COORDINATE MEASURING DEVICE

PROCEDE DE DETERMINATION D'UNE COORDONNEE SPATIALE D'UN POINT DE MESURE SUR UN OBJET A MESURER ET INSTRUMENT DE MESURE DE COORDONNEE CORRESPONDANT

(84) Benannte Vertragsstaaten:
**DE IT**

(30) Priorität: **18.01.2005 DE 102005003321**

(43) Veröffentlichungstag der Anmeldung:
**03.10.2007 Patentblatt 2007/40**

(73) Patentinhaber: **Carl Zeiss Industrielle Messtechnik GmbH**
**73447 Oberkochen (DE)**

(72) Erfinder: **GRUPP, Günter**
**89558 Böhmenkirch (DE)**

(74) Vertreter: **Witte, Weller & Partner Patentanwälte mbB**
**Postfach 10 54 62**
**70047 Stuttgart (DE)**

(56) Entgegenhaltungen:
DE-C1- 3 826 783   US-A- 4 587 622
US-A- 4 676 649   US-A- 5 333 386

EP 1 839 011 B1

**Beschreibung**

Die vorliegende Erfindung betrifft ein Verfahren zum Bestimmen von zumindest einer Raumkoordinate eines Messpunktes an einem Messobjekt, mit den Schritten:

- Anfahren des Messpunktes mit einem Tastkopf, der an einer Verschiebemechanik angeordnet ist, die ein erstes und ein zweites verfahrbares Auflager aufweist,

- Bestimmen einer ersten Verschiebeposition des ersten Auflagers und einer zweiten Verschiebeposition des zweiten Auflagers,

- Bestimmen einer Istdifferenz zwischen der ersten und der zweiten Verschiebeposition, und

- Bestimmen der Raumkoordinate des Messpunktes unter Verwendung der Istdifferenz,

- wobei ein statischer Differenzwert bereitgestellt wird, der einen reproduzierbaren Differenzanteil zwischen der ersten und der zweiten Verschiebeposition repräsentiert,

- wobei der statische Differenzwert von der Istdifferenz subtrahiert wird, um einen dynamischen Differenzwert zu erhalten, und

- wobei die Raumkoordinate unter Verwendung des dynamischen Differenzwertes bestimmt wird.

Die Erfindung betrifft ferner ein entsprechendes Koordinatenmessgerät, mit einem Tastkopf zum Anfahren des Messpunktes, wobei der Tastkopf an einer Verschiebemechanik angeordnet ist, die ein erstes und ein zweites verfahrbares Auflager aufweist, mit einer ersten und einer zweiten Messeinrichtung zum Bestimmen einer ersten Verschiebeposition des ersten Auflagers und einer zweiten Verschiebeposition des zweiten Auflagers, mit einer Istdifferenzbildungseinheit zum Bestimmen einer Istdifferenz zwischen der ersten und der zweiten Verschiebeposition, und einem Speicher zum dauerhaften Abspeichern und Bereitstellen eines statischen Differenzwertes, der einen reproduzierbaren Differenzanteil zwischen der ersten und zweiten Verschiebeposition repräsentiert, einem Subtrahierer zum Subtrahieren des statischen Differenzwertes von der Istdifferenz, um einen dynamischen Differenzwert zu erhalten, und einer Berechnungseinheit zum Bestimmen der Raumkoordinate des Messpunktes unter Verwendung der Istdifferenz, wobei der Subtrahierer dazu ausgebildet ist, den dynamischen Differenzwert der Berechnungseinheit zum Bestimmen der Raumkoordinate zuzuführen.

Ein solches Verfahren und ein solches Koordinatenmessgerät sind aus US 5,333,386 bekannt.

Ganz allgemein werden die Raumkoordinaten eines Messpunktes mit einem Koordinatenmessgerät bestimmt, indem der Messpunkt mit einem verfahrbaren Tastkopf des Koordinatenmessgerätes angefahren wird. Bei taktilen Koordinatenmessgeräten wird der Messpunkt mit einem Tastelement (in der Regel ein Taststift) angetastet. Die Stellung des Tastkopfes und gegebenenfalls die Auslenkung des Tastelements im Raum ermöglichen dann die Bestimmung der gewünschten Raumkoordinaten des Messpunktes. Vergleichbares gilt für Koordinatenmessgeräte mit optischen oder anderweitig berührungslos messenden Tastköpfen. Wie leicht einzusehen ist, hängt die Messgenauigkeit der Koordinatenmessgerätes stark davon ab, wie genau die jeweilige Position des Tastkopfes beim Anfahren des Messpunktes bestimmt werden kann.

Messfehler können einerseits durch Ungenauigkeiten und/oder Veränderungen der Positionsmesseinrichtungen für den Tastkopf entstehen. Beispielsweise werden als Messeinrichtungen häufig Glasmaßstäbe eingesetzt, die beim Verfahren des Tastkopfes inkremental abgelesen werden, um die jeweilige Verfahrposition des Tastkopfes im Raum zu bestimmen. Die Glasmaßstäbe können sich in Abhängigkeit von der Temperatur ausdehnen oder zusammenziehen.

Eine weitere Fehlerursache sind fertigungstechnische Toleranzen in den Führungen des Koordinatenmessgerätes, gewissermaßen also "Welligkeiten" oder andere Abweichungen von einer exakt geraden Führungsbahn des Tastkopfes in der vorgesehenen Bewegungsrichtung.

Eine dritte Fehlerursache können elastische Verformungen des Koordinatenmessgerätes in Abhängigkeit davon sein, welche Schwerkraftmomente der Tastkopf in seiner jeweiligen Verfahrposition auf die Verschiebemechanik ausübt.

Schließlich können Messfehler aus Positionsabweichungen des Tastkopfes entstehen, die sich aufgrund der und/oder bei den Verfahrbewegungen ergeben. Hierzu gehören beispielsweise Schwingungen, die durch das Anfahren und Abbremsen des Tastkopfes hervorgerufen werden können. Bei Koordinatenmessgeräten in Portal- oder Gantrybauweise (d.h. Koordinatenmessgeräten mit einer verfahrbaren Brücke auf zwei voneinander beabstandeten, parallel zueinander verfahrbaren Auflagern) können Messfehler beispielsweise durch Bewegungen entlang der Bewegungsachse der Brücke (typischerweise die Y-Achse) auftreten, und zwar bei mangelnder Synchronität der Verfahrbewegung der beiden Auflager. Wenn sich beispielsweise das linke Auflager in der Y-Achse um eine Distanz ∆Y weiter bewegt als das rechte Auflager, führt dies zu einer Rotation des Tastkopfes um eine orthogonale Achse (typischerweise Z-Achse). Die Folge sind Messfehler sowohl in Y-Richtung als auch in einer zweiten Orthogonalrichtung (typischerweise X-Achse). Es sei in diesem Zusammenhang allerdings betont, dass die Erfindung nicht auf Messfehler in diesen speziellen Achsen beschränkt ist. Die Erfindung kann vielmehr bei allen Koordinatenmessgeräten eingesetzt werden, bei denen eine Verschiebeposition des Tastkopfes entlang von zumindest einer Achse mit zwei voneinander beabstandeten Messeinrichtungen für diese eine Achse bestimmt werden.

Es ist bereits seit langem bekannt, temperaturverursachte Messfehler zu korrigieren, indem man die von den Messeinrichtungen gelieferten Messwerte in Abhängigkeit von der jeweiligen Umgebungstemperatur korrigiert. Die temperaturabhängigen Längenänderungen von Glasmaßstäben können beispielsweise mit Hilfe von Temperaturausdehnungskoeffizienten korrigiert werden. Des Weiteren ist es bekannt, geometrische Führungsfehler und elastische Verformungen mit Hilfe von Korrekturwerten zu korrigieren, die mit einer Kalibrierungsfahrt des Tastkopfes für verschiedene Tastkopfpositionen aufgenommen und in einem Speicher bereitgestellt werden. Derartige Korrekturverfahren werden in der Fachterminologie häufig als CAA (Computer Aided Accuracy) bezeichnet, und die Anmelderin der vorliegenden Erfindung bietet unter der Bezeichnung LASERCAL ein Programm an, um Kalibrierungsdaten aufzunehmen und Messabweichungen entsprechend zu korrigieren. Aus DE 102 14 490 A1 ist beispielsweise ein CAA-Verfahren bekannt, um vor allem elastische Führungsfehler bei einem Horizontalarm-Koordinatenmessgerät zu korrigieren.

Diese Verfahren sind jedoch nicht in der Lage, Messfehler mit der gewünschten Genauigkeit zu korrigieren, die die Folge von nicht-reproduzierbaren Variationen im Messbetrieb sind. Hierzu gehören u.a. rotatorische Messfehler bei Koordinatenmessgeräten in Portal- oder Gantrybauweise infolge von Schwingungen und/oder infolge mangelnder Synchronität bei Bewegungen entlang der Y-Achse.

DE 22 48 194 B2 schlägt vor, die jeweiligen Verschiebepositionen der Portalfüße eines Koordinatenmessgerätes in Portalbauweise mit zwei voneinander beabstandeten Messeinrichtungen aufzunehmen. Aus den erhaltenen Messwerten wird ein Differenzwert gebildet. Dieser Differenzwert wird anschließend dazu verwendet, um den von einer der Messeinrichtungen gelieferten Messwert zu korrigieren. Dabei wird nicht unterschieden, ob der Differenzwert durch reproduzierbare oder nicht-reproduzierbare Variationen verursacht wurde.

Ein vergleichbares Verfahren ist aus EP 0 309 094 A1 bekannt. Auch in diesem Fall wird keine Unterscheidung zwischen reproduzierbaren (z.B. geometrisch bedingten) und nicht-reproduzierbaren (dynamisch verursachten) Abweichungen und daraus resultierenden Messfehlern gemacht.

Aus DE 29 50 926 A1 ist ein Koordinatenmessgerät bekannt, bei dem für jede Bewegungsachse drei räumlich voneinander beabstandete Messeinrichtungen verwendet werden, um Messfehler zu korrigieren. Auch in diesem Fall wird eine Differenzbildung zur Korrektur herangezogen, ohne dass jedoch zwischen Messfehlern unterschiedlicher Ursache unterschieden wird.

Aus der eingangs genannten US 5,333,386 ist es schließlich bekannt, die Messfehler eines Koordinatenmessgerätes in Portalbauweise bei einer Verfahrbewegung entlang der Y-Achse zu korrigieren, indem die Abweichungen der Positionsmesswerte von zwei beabstandeten Messeinrichtungen während einer Zeitspanne vor dem Antasten aufgezeichnet werden und indem aus dem zeitlichen Verlauf der gespeicherten Messwerte ein Korrekturwert für die Position des Tastelements im Antastzeitpunkt bestimmt wird. Damit ist es möglich, dynamische Messfehler infolge von Schwingungen zu korrigieren. Dieses Verfahren setzt allerdings eine hochgenaue Zerodurskala an einem Portalfuß voraus.

Wenngleich die zuletzt genannten Verfahren bereits höhere Messgenauigkeiten bei Koordinatenmessgeräten in Portal- oder Gantrybauweise liefern als ohne rechnerische Korrektur, ist die Messgenauigkeit noch nicht optimal.

Es besteht daher der Wunsch und es ist eine Aufgabe der vorliegenden Erfindung, ein Verfahren der eingangs genannten Art anzugeben, mit dem die Messgenauigkeit von Koordinatenmessgeräten mit zwei voneinander beabstandeten Messeinrichtungen für eine Achse noch weiter gesteigert werden kann, und zwar vorzugsweise auf eine möglichst einfache und kostengünstige Art und Weise. Es ist ferner eine Aufgabe der vorliegenden Erfindung, ein entsprechendes Koordinatenmessgerät anzugeben, das eine noch höhere Messgenauigkeit ermöglicht.

Diese Aufgabe wird gemäß einem Aspekt der Erfindung durch ein Verfahren der eingangs genannten Art gelöst, bei dem der statische Differenzwert mit Hilfe einer Kalibrierungsfahrt bestimmt und anschließend in einem Speicher dauerhaft bereitgestellt wird, und bei dem die unter Verwendung des dynamischen Differenzwertes bestimmte Raumkoordinate anschließend unter Verwendung des statischen Differenzwertes korrigiert wird.

Gemäß einem weiteren Aspekt der Erfindung wird die Aufgabe durch ein Koordinatenmessgerät der eingangs genannten Art gelöst, in dem die Berechnungseinheit dazu ausgebildet ist, die unter Verwendung des dynamischen Differenzwertes bestimmte Raumkoordinate anschließend unter Verwendung des statischen Differenzwertes zu korrigieren, wobei der statische Differenzwert mit Hilfe einer Kalibrierungsfahrt bestimmt und anschließend in einem Speicher dauerhaft bereitgestellt ist.

Gemäß einem weiteren Aspekt der Erfindung wird die Aufgabe durch ein Computerprogrammprodukt gelöst, mit Programmcode zum Ausführen eines Verfahrens der zuvor genannten Art, wenn der Programmcode in einen Arbeitsspeicher eines Koordinatenmessgerätes geladen wird.

Die vorliegende Erfindung beruht damit auf der Idee, die an sich bekannte Istdifferenz zwischen den Messwerten der beiden Messeinrichtungen in einen ersten (statischen) Differenzwert und einen zweiten (dynamischen) Differenzwert aufzuspalten. Da der erste, statische Differenzwert in einem Speicher des Koordinatenmessgerätes dauerhaft bereitgestellt wird, repräsentiert er einen Anteil an der Istdifferenz, der für eine Vielzahl von Messungen gleich ist. Er repräsentiert somit reproduzierbare Messfehler. Im Gegensatz dazu repräsentiert der zweite, dynamische Differenzwert einen Anteil an der Istdifferenz, der Schwankungen der tatsächlichen Istdifferenz gegenüber dem statischen Differenzwert(anteil) beschreibt. Mit anderen Worten ist der zweite, dynamische Differenzwert eine Größe, die von einer Messung zur nächsten individuell variiert und nicht identisch reproduzierbar ist.

Die Aufspaltung der jeweils aktuellen Istdifferenz in einen statischen, als reproduzierbar angenommenen Anteil und einen dynamischen, als nicht-reproduzierbar angenommenen Anteil ermöglicht es, die aktuellen Messwerte in Abhängigkeit von den verschiedenen Fehlerursachen gezielt zu korrigieren. Mit anderen Worten stellt die vorliegende Erfindung erstmals ein Verfahren und ein entsprechendes Koordinatenmessgerät bereit, bei denen einzelnen, sich überlagernden Fehlerursachen individuell Rechnung getragen wird und bei denen die Korrektur der Messfehler abgestimmt auf die einzelnen Ursachen durchgeführt wird. Dadurch ist eine genauere Korrektur der verschiedenen Messfehler möglich.

Mit anderen Worten ermöglicht das neue Verfahren genauere Messwerte als die bislang bekannten Ansätze. Insbesondere wird durch die vorliegende Erfindung vermieden, dynamisch bedingte (nicht-reproduzierbare) Messfehler zu stark zu korrigieren, nämlich um den erfindungsgemäß herausgerechneten statischen bzw. reproduzierbaren Anteil. Andererseits ermöglicht es die vorliegende Erfindung, den statischen Differenzwertanteil unter Verwendung von bekannten und etablierten Korrekturwerkzeugen durchzuführen, wie z.B. das oben genannte Programm LASERCAL. Die praktische Realisierung der vorliegenden Erfindung ist daher sehr einfach und kostengünstig und kann vor allem auch bei älteren, bereits in Benutzung befindlichen Koordinatenmessgeräten mit geringem Aufwand nachgerüstet werden.

Zudem erfolgt also zunächst eine Korrektur der erhaltenen Positionswerte anhand des dynamischen Differenzwertes, und erst anschließend wird der bereits einmal korrigierte Positionswert unter Verwendung des statischen Differenzwertes nochmals korrigiert. Dadurch wird die Raumkoordinate des Messpunktes jedoch exakter bestimmt, und zwar insbesondere dann, wenn die zweite Korrektur mit Hilfe von bekannten und etablierten CAA-Werkzeugen zur Korrektur von statischen Führungsfehlern erfolgt.

Die Durchführung einer Kalibrierungsfahrt berücksichtigt Fertigungstoleranzen und führt daher zu einer hohen Genauigkeit, insbesondere wenn eine Standard-CAA für die Messwertkorrektur eingesetzt werden. Besonders bevorzugt ist es außerdem, wenn entlang der Bewegungsachse des Portals eine Vielzahl von statischen Differenzwerten bestimmt und bereitgestellt wird, da die Standard-CAA dann in an sich bekannter Weise ortsabhängig arbeiten und ggf. Interpolationswerte verwenden kann.

Die oben genannte Aufgabe ist daher vollständig gelöst.

In einer Ausgestaltung werden die Auflager beim Anfahren des Messpunktes weitgehend parallel zueinander in einer ersten Raumrichtung verfahren, und der Tastkopf wird beim Anfahren des Messpunktes außerdem in einer zweiten, die Auflager verbindenden Raumrichtung verfahren, wobei die Raumkoordinate sowohl in der ersten Raumrichtung als auch in der zweiten Raumrichtung unter Verwendung des dynamischen Differenzwertes bestimmt wird.

In dieser Ausgestaltung wird nicht nur die Raumkoordinate in der erfindungsgemäßen Weise korrigiert, die parallel zur Bewegungsrichtung der Portalfüße liegt, sondern es erfolgt auch eine Korrektur der Messwerte in einer zweiten, dazu senkrechten Raumrichtung (üblicherweise die X-Koordinate). Die Messgenauigkeit ist dadurch noch höher.

In einer weiteren Ausgestaltung wird der statische Differenzwert mit einer Kalibrierungsfahrt ohne Messwertkorrekturen bestimmt.

Mit anderen Worten wird die Kalibrierungsfahrt in dieser Ausgestaltung durchgeführt, nachdem eine vorhandene Messwertkorrektur (Standard-CAA) ausgeschaltet wurde. Der bei der Kalibrierungsfahrt aufgenommene Differenzwert entspricht damit direkt dem statischen Differenzwert im Sinne der vorliegenden Erfindung. Die Aufnahme und Verarbeitung des statischen Differenzwertes ist in dieser Ausgestaltung einfacher und schneller.

In einer weiteren Ausgestaltung erfolgt das Anfahren des Messpunktes mit Hilfe von zumindest zwei Antrieben, wobei ein erster Antrieb das erste Auflager bewegt, und wobei ein zweiter Antrieb das zweite Auflager bewegt, wobei jedoch die Kalibrierungsfahrt mit nur einem der Antriebe durchgeführt wird.

Mit dieser Ausgestaltung wird erreicht, dass die Aufnahme des statischen Differenzwertes weitgehend zwangsfrei erfolgt. Verformungen und daraus resultierende, nicht-reproduzierbare Messfehler lassen sich besser vermeiden. Die erfindungsgemäße Korrektur führt dadurch zu noch genaueren Ergebnissen.

In einer weiteren Ausgestaltung werden die erste und die zweite Verschiebeposition mit Hilfe von temperaturkorrigierten Messeinrichtungen bestimmt.

Mit anderen Worten erfolgt die erfindungsgemäße Bestimmung der Raumkoordinate unter Verwendung des dynamischen Differenzwertes erst, nachdem die von den Messeinrichtungen gelieferten Positionswerte in Bezug auf temperaturabhängige Abweichungen korrigiert wurden. Vorzugsweise werden die Positionswerte jeder Messeinrichtung unter Verwendung der aktuellen Messtemperaturen einzeln bestimmt. Diese Ausgestaltung ermöglicht eine noch höhere Genauigkeit.

In einer weiteren Ausgestaltung erfolgt das Anfahren des Messpunktes mit Hilfe von zumindest zwei Antrieben, wobei ein erster Antrieb das erste Auflager bewegt, wobei ein zweiter Antrieb das zweite Auflager bewegt, und wobei die beiden Antriebe von einem gemeinsamen Regler angesteuert werden, der den dynamischen Differenzwert als Eingangsgröße erhält.

In dieser Ausgestaltung wird der dynamische Differenzwert nicht nur zum Korrigieren der erhaltenen Positionswerte verwendet, sondern er dient außerdem noch dazu, zwei getrennt angetriebene Auflager mit hoher Synchronität zu steuern. Dies hat zur Folge, dass dynamische Messfehler sehr klein gehalten werden und infolge dessen auch die Genauigkeit bei der Bestimmung der Raumkoordinate des Messpunktes erhöht ist. Die Ausgestaltung ist darüber hinaus von Vorteil, weil durch eine solche Regelung ein Arbeiten der Antriebe gegen die Führungen der Portalfüße vermieden wird. Infolge dessen ist der Verschleiß in dieser Ausgestaltung geringer.

In einer weiteren Ausgestaltung werden der erste und der zweite Antrieb abgeschaltet, wenn der dynamische Differenzwert einen definierten Schwellenwert überschreitet.

Diese Ausgestaltung schützt ein erfindungsgemäßes Koordinatenmessgerät mit separaten Antrieben vor erhöhtem Verschleiß, da ein hoher dynamischer Differenzwert auf einen mangelnden Gleichlauf der Antriebe und eine daraus resultierende Belastung der Führungen hindeutet.

In einer weiteren Ausgestaltung beinhaltet der gemeinsame Regler einen gemeinsamen Lageregler und einen Synchronregler, der dem Lageregler nachgeordnet ist, wobei der dynamische Differenzwert dem Synchronregler als Eingangsgröße zugeführt ist.

In dieser Ausgestaltung ist der gemeinsame Regler zweistufig ausgebildet, wobei nur die zweite Stufe, nämlich der Synchronregler, den dynamischen Differenzwert als Eingangsgröße erhält. Damit kommt dem Synchronregler die Aufgabe zu, die Synchronität der beiden Antriebe zu gewährleisten, während der vorgeschaltete Lageregler die grundlegende Positionierung der Portalfüße steuert. Diese Ausgestaltung ist einfach und mit geringerem Aufwand (kostengünstiger) zu realisieren als ein eigener Lageregler für jeden Antrieb.

In einer besonders bevorzugten Ausgestaltung steuert der Synchronregler die beiden Antriebe in Abhängigkeit von dem dynamischen Differenzwert und in Abhängigkeit von einer gemeinsamen Sollvorgabe des Lagereglers an. Mit anderen Worten teilt der Synchronregler die Sollvorgaben des Lagereglers hier auf die beiden Antriebe auf, wobei er den dynamischen Differenzwert berücksichtigt, um die angetriebenen Auflager möglichst synchron in die vorgegebene Position zu bewegen. Der gemeinsame Lageregler regelt die Antriebe dabei gewissermaßen entlang einer fiktiven Mittellinie zwischen den eigentlichen Bewegungsachsen der Antriebe. Diese Ausgestaltung ist besonders einfach und kostengünstig, da trotz des Dual-Drive-Antriebs ein einfacher Lageregler eingesetzt werden kann, der sehr schnell auf die fiktive Mittelachse parametriert werden kann.

In einer weiteren Ausgestaltung wird ein Antriebsstrom für den ersten und den zweiten Antrieb auf einen definierten Maximalwert begrenzt, wobei der definierte Maximalwert vorzugsweise etwa gleich dem für eine Beschleunigung der Auflager benötigten Stromwert ist.

Mit dieser Ausgestaltung wird sichergestellt, dass das neue Koordinatenmessgerät selbst bei einem Totalausfall des gemeinsamen Reglers nicht beschädigt wird. Mittelbar wird damit auch die hohe Genauigkeit des neuen Koordinatenmessgerätes sichergestellt.

In einer weiteren Ausgestaltung steuert der gemeinsame Regler den ersten und den zweiten Antrieb so an, dass sich in beiden Antrieben ein Antriebsstrom von in etwa derselben Höhe einstellt.

Besonders vorteilhaft werden die beiden Antriebe beim Ausrichten des neuen Koordinatenmessgerätes in dieser Weise angesteuert. Durch diese Ausgestaltung wird ein Arbeiten der Antriebe gegen die Linearführungen der Auflager auch in den Fällen vermieden, in denen beispielsweise der Nullpunkt einer der Messeinrichtungen aufgrund von Temperatureffekten verschoben ist. Ohne die bevorzugte Ausgestaltung würde der gemeinsame Regler in einem solchen Fall ständig versuchen, den scheinbaren Positionsunterschied der beiden Auflager auszuregeln. Da die Auflager in dem angenommenen Fall tatsächlich jedoch nicht so weit auseinanderliegen, wie aufgrund der Maßstabsverschiebung signalisiert wird, würde der gemeinsame Regler dauerhaft gegen die Führungen der Auflager arbeiten. Der dadurch verursachte Verschleiß und die Deformationen der Führungen wird mit dieser Ausgestaltung vermieden. Besonders vorteilhaft ist diese Ausgestaltung beim Ausrichten des Koordinatenmessgerätes und beim Durchführen der Kalibrierungsfahrten, da eine zwangsfreie Bewegung des Tastkopfes besser reproduzierbare und damit besser korrigierbare Messwerte liefert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1     eine vereinfachte Darstellung eines bevorzugten Ausführungsbeispiels für das neue Koordinatenmessgerät,

Fig. 2     eine schematische Darstellung zur Erläuterung von Messfehlern, die bei ungleichem Vorschub der Portalfüße eines Koordinatenmessgerätes der in Fig. 1 gezeigten Art hervorgerufen werden,

Fig. 3     ein vereinfachtes Flussdiagramm, das die Bereitstellung des statischen Differenzwertes zeigt,

Fig. 4     ein vereinfachtes Flussdiagramm zur Erläuterung eines Ausführungsbeispiels des erfindungsgemäßen Verfahrens,

Fig. 5     ein Funktionsblockschaltbild eines bevorzugten Reglers für ein Koordinatenmessgerät der in Fig. 1 gezeigten Art,

Fig. 6     ein Funktionsblockschaltbild für einen Synchronregler, der in dem Regler aus Fig. 5 Anwendung finden kann,

Fig. 7     eine Ergänzung des in Fig. 5 gezeigten Reglers, um auch im Langzeitbetrieb eine hohe Synchronität zu erreichen, und

Fig. 8     ein weiteres bevorzugtes Ausführungsbeispiel für einen gemeinsamen Regler.

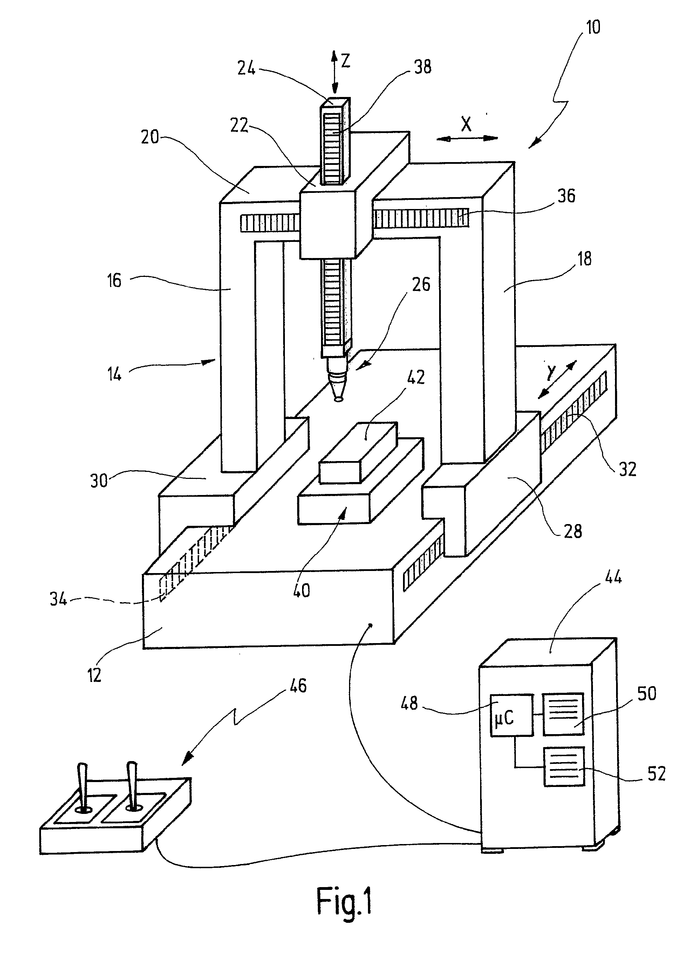

In Fig. 1 ist ein Ausführungsbeispiel des neuen Koordinatenmessgerätes in seiner Gesamtheit mit der Bezugsziffer 10 bezeichnet.

Das Koordinatenmessgerät 10 besitzt eine Basis 12, auf der ein Portal 14 in Längsrichtung (Y-Richtung) verschieblich angeordnet ist. Das Portal 14 hat zwei Portalfüße (allgemeiner: Auflager) 16, 18, die an ihren oberen Enden durch eine Brücke 20 verbunden sind. Auf der Brücke 20 sitzt ein Schlitten 22, der entlang der Brücke, also in einer die Portalfüße 16, 18 verbindenden Raumrichtung (X-Richtung), verschieblich ist. An dem Schlitten 22 ist eine Pinole 24 angeordnet, die in einer dritten Raumrichtung (Z-Richtung) senkrecht zur ersten und zweiten Raumrichtung verschieblich ist. Die drei genannten Raumrichtungen X, Y und Z stehen bevorzugt orthogonal zueinander, was für die vorliegende Erfindung jedoch nicht zwingend erforderlich ist.

Am unteren freien Ende der Pinole 24 ist ein Tastkopf 26 angeordnet, an dem ein nicht näher bezeichneter Taststift befestigt ist. Der Taststift dient in bekannter Weise zum Antasten eines Messobjekts. Die vorliegende Erfindung ist jedoch nicht auf taktile Koordinatenmessgeräte beschränkt und kann ebenso bei Koordinatenmessgeräten eingesetzt werden, bei denen ein Messpunkt berührungslos angefahren wird, beispielsweise also ein Koordinatenmessgerät mit optischem Tastkopf. Des weiteren ist die Erfindung nicht auf Koordinatenmessgeräte in der hier gezeigten Portalbauweise beschränkt. Sie kann gleichermaßen (und bevorzugt) bei Koordinatenmessgeräten in Gantry-Bauweise eingesetzt werden, bei denen nur die Brücke 20 mit zwei Auflagern entlang von zwei feststehenden, hochgelegten Schienen verfahrbar ist. Darüber hinaus kann die Erfindung generell bei allen Koordinatenmessgeräten eingesetzt werden, bei denen eine Verschiebung des Tastkopfes in zumindest einer Bewegungsrichtung mit Hilfe von zwei voneinander beabstandeten Messeinrichtungen erfasst wird.

Die Portalfüße 16, 18 besitzen in diesem Ausführungsbeispiel jeweils einen eigenen Antrieb 28, 30, der eine Bewegung des Portals in Y-Richtung ermöglicht. Alternativ hierzu kann dier Erfindung jedoch auch eingesetzt werden, wenn nur einer der Portalfüße (ein Auflager) angetrieben wird und der zweite Portalfuß antriebslos mitläuft.

An den Längsseiten der Basis 12 sind zwei Maßstäbe 32, 34 schematisch dargestellt, die sich parallel zur Y-Richtung erstrecken. In bevorzugten Ausführungsbeispielen handelt es sich um Glasmaßstäbe, mit denen die Y-Position der Portalfüße 16, 18 getrennt voneinander bestimmt wird. Die Maßstäbe 32, 34 sind somit Bestandteil von zwei Messeinrichtungen für die Y-Position des Tastkopfes 26. Es versteht sich, dass diese Messeinrichtungen außerdem noch geeignete Sensoren zum Ablesen der Maßstäbe 32, 34 beinhalten, die hier jedoch der Einfachheit halber nicht dargestellt sind. Darüber hinaus sei angemerkt, dass die Erfindung nicht auf die Verwendung von Glasmaßstäben beschränkt ist und auch mit anderen Messeinrichtungen zur Erfassung der Y-Position des Tastkopfes verwendet werden kann.

Ein weiterer Maßstab 36 ist parallel zur X-Richtung an der Brücke 20 angeordnet. Schließlich ist noch ein weiterer Maßstab 38 parallel zur Z-Richtung an der Pinole 24 angeordnet. Mit Hilfe der Maßstäbe 36, 38 lässt sich die aktuelle X-Position und Z-Position des Tastkopfes 26 in an sich bekannter Weise messtechnisch erfassen.

Bezugsziffer 40 bezeichnet ein Messobjekt, an dem die Raumkoordinaten eines Messpunktes 42 bestimmt werden sollen.

Mit der Bezugsziffer 44 ist eine Steuer- und Auswerteeinheit bezeichnet, die dazu ausgebildet ist, die Antriebe des Koordinatenmessgerätes 10 so anzusteuern, dass der Tastkopf 26 zu dem Messpunkt 42 verfahren wird. Für einen manuellen Betrieb kann die Steuereinheit 44 mit einem Bedienpult 46 verbunden sein. Es ist jedoch auch möglich, dass die Steuereinheit 44 Messpunkte 42 des Messobjekts 40 vollautomatisch anfährt und vermisst.

Die Steuereinheit 44 beinhaltet einen Prozessor 48 sowie mehrere Speicher, die hier vereinfacht bei den Bezugsziffern 50 und 52 dargestellt sind. Im Speicher 50 ist ein Computerprogramm abgespeichert, mit dessen Hilfe das nachfolgend erläuterte, Verfahren durchgeführt werden kann. Im Speicher 52 sind statische Differenzwerte dauerhaft abgespeichert, die gemäß einem Ausführungsbeispiel des erfindungsgemäßen Verfahrens in einer Kalibrierungsfahrt ermittelt wurden.

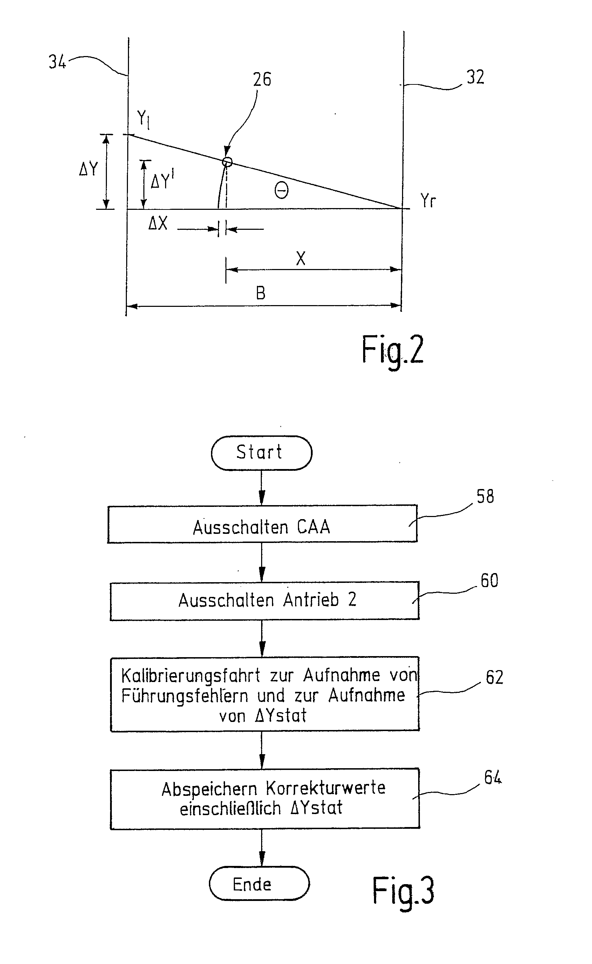

Fig. 2 zeigt eine vereinfachte geometrische Darstellung mit den beiden Maßstäben 32, 34 für die Bestimmung der Y-Position des Tastkopfes 26. Angenommen sei dabei, dass sich der Tastkopf 26 an der mit einem Kreis bezeichneten Position befindet. Diese Position resultiert aus einer Verschiebung des Tastkopfes 26 in X-Richtung um den Betrag X, gemessen vom rechten äußeren Ende des Maßstabes 36, sowie einer Verschiebung des Tastkopfes 26 in Y-Richtung auf die Sollpositionen $Y_r$. Aufgrund verschiedener Ursachen, wie beispielsweise einer mangelnden Synchronität der Antriebe 28, 30 oder aufgrund von Schwingungen des Portals 14, liegen die Messpositionen $Y_l$ und $Y_r$ jedoch um die Istdifferenz $\Delta Y$ auseinander. Die tatsächliche Ablage des Tastkopfes 26 von dem hier als Referenz herangezogenen Maßstab 32 beträgt dann $\Delta Y'$, und sie ist von der jeweiligen X-Position des Tastkopfes abhängig 26, wie sich aus der Darstellung in Fig. 2 ergibt.

Der Tastkopf 26 erfährt aufgrund der durch die ungleichen Y-Positionen an den beiden Maßstäben 32, 34 hervorgerufenen Rotation auch eine Abweichung in X-Richtung, die hier als $\Delta X$ bezeichnet ist.

Der Korrekturwert $\Delta Y'$ für die Y-Position ergibt sich mit den bekannten Strahlengesetzen zu

$$\Delta Y' \;=\; \Delta Y \cdot \frac{X \pm L_x}{B} \;=\; (X \pm L_x) \cdot \tan\theta,$$

wobei B der Abstand zwischen den beiden Maßstäben 32, 34 ist und wobei $L_X$ die Länge des Tasters (hier nicht dargestellt) in X-Richtung ist.

Der Korrekturwert $\Delta X$ ergibt sich ferner zu

$$\Delta X = L_Y \cdot \tan\theta,$$

wobei $L_Y$ die Länge des Tasters (hier nicht dargestellt) in Y-Richtung ist.

Die in Fig. 2 dargestellten Abweichungen beinhalten einen reproduzierbaren Fehleranteil, vor allem statische und eventuell elastische Führungsfehler, sowie einen nicht-reproduzierbaren Anteil, der bei jeder erneuten Messwertaufnahme variiert. Der reproduzierbare Anteil wird im Folgenden durch den statischen Differenzwert angenähert, der nicht-reproduzierbare Anteil durch den dynamischen Differenzwert.

Fig. 3 zeigt ein Ausführungsbeispiel, wie ein statischer Differenzwert $\Delta$Ystat bestimmt werden kann. Dazu wird gemäß Schritt 58 zunächst die bei Koordinatenmessgeräten üblicherweise vorhandene rechnerische Fehlerkorrektur (CAA) ausgeschaltet. Des Weiteren wird gemäß Schritt 60 der zweite Antrieb für das Portal 14 ausgeschaltet, beispielsweise also der Antrieb 30, oder die Kalibrierungsfahrt wird vor dem Anbau des zweiten Antriebs 30 durchgeführt. Mit anderen Worten wird das Portal 14 zur Aufnahme des statischen Differenzwertes $\Delta$Ystat vorteilhafterweise mit nur einem der Antriebe 28, 30 verfahren.

Anschließend erfolgt gemäß Schritt 62 eine Kalibrierungsfahrt entlang der Y-Richtung, wobei an definierten Stützstellen Messwerte zur späteren Korrektur von Führungsfehlern aufgenommen werden. Außerdem wird zumindest ein statischer Differenzwert $\Delta$Ystat bestimmt, der für die Kalibrierungsfahrt dem Differenzwert $\Delta Y'$ aus Fig. 2 für eine bestimmte Position des Tastkopfes 26 entspricht. Vorzugsweise werden für eine Vielzahl von Tastkopfpositionen 26 statische Differenzwerte $\Delta$Ystat aufgenommen, um die Korrektur der Positionswerte an die jeweilige Tastkopfposition 26 anzupassen.

Schließlich erfolgt im Schritt 64 das Abspeichern aller Korrekturwerte einschließlich des oder der statischen Differenzwerte $\Delta$Ystat in dem Speicher 52 des Koordinatenmessgerätes 10.

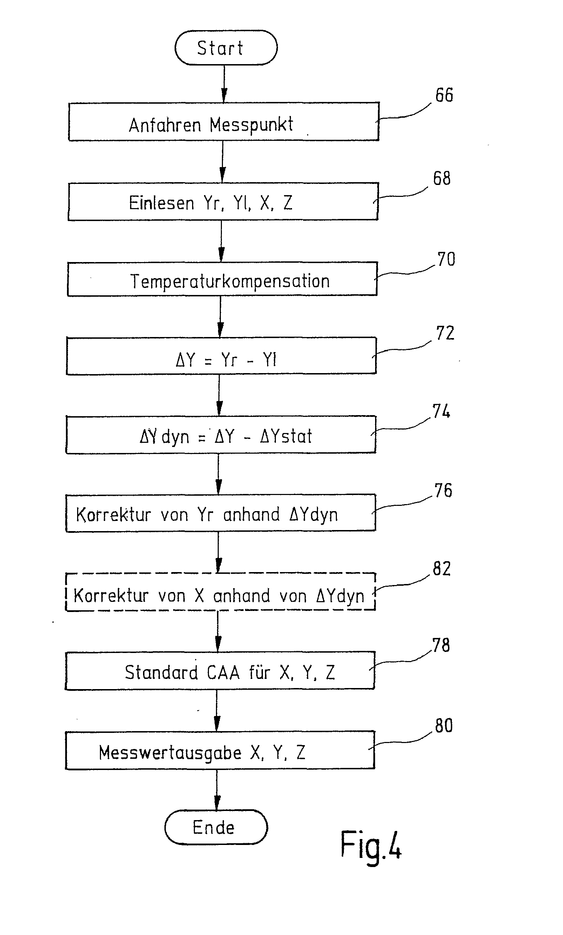

Fig. 4 zeigt ein Ausführungsbeispiel, wie die Raumkoordinaten bestimmt werden können. Gemäß Schritt 66 wird der Messpunkt 42 mit dem Tastkopf 26 angefahren. Nach dem Erreichen des Messpunktes 42 werden die Raumkoordinaten des Tastkopfes 26 mit Hilfe der Maßstäbe 32, 34, 36, 38 eingelesen. Damit erhält man Koordinatenwerte $Y_r$, $Y_l$, X und Z. (Der Einfachheit halber sind Auslenkungen des Taststiftes beim Antasten des Messpunktes 42 hier außer Betracht gelassen. Es versteht sich jedoch, dass derartige Auslenkungen in an sich bekannter Weise bei der Bestimmung der Raumkoordinate berücksichtigt werden können, wenn die Messung mit einem entsprechenden Taststift durchgeführt wird.)

Gemäß Schritt 80 erfolgt anschließend eine Temperaturkompensation, d.h. eine Korrektur der aufgenommenen Messwerte $Y_r$, $Y_l$, X und Z anhand der jeweiligen Umgebungstemperaturen und der Temperaturausdehnungskoeffizienten der Maßstäbe 32 bis 38. Bevorzugt erfolgt die Korrektur der Messwerte in Abhängigkeit von der Temperatur jedes einzelnen Maßstabes 32 bis 38.

Im nächsten Schritt 72 wird die Istdifferenz $\Delta Y$ zwischen den (temperaturkorrigierten) Y-Positionsmesswerten $Y_l$, $Y_r$ bestimmt. Gemäß Schritt 74 erfolgt dann die Bestimmung eines dynamischen Differenzwertes $\Delta Y$dyn, indem der gespeicherte statische Differenzwert $\Delta Y$stat von der Istdifferenz $\Delta Y$ subtrahiert wird.

Im nächsten Schritt 76 erfolgt die Bestimmung der Y-Position des Tastkopfes 26 unter Verwendung des dynamischen Differenzwertes $\Delta Y$dyn, indem der vom Maßstab 32 gelieferte Wert $Y_r$ mit dem dynamischen Differenzwert $\Delta Y$dyn korrigiert wird (Addition oder Subtraktion, je nach Richtung der Abweichung).

Anschließend erfolgt gemäß Schritt 78 eine an sich bekannte Standardkorrektur aller erfassten Messwerte X, Y, Z unter Verwendung der in der Kalibrierungsfahrt aufgenommenen Korrekturwerte. Dabei wird als Ausgangspunkt für die Y-Position des Tastkopfes 26 allerdings die schon um den dynamischen Differenzwert korrigierte Y-Position des Tastkopfes 26 verwendet. In einem bevorzugten Ausführungsbeispiel erfolgt die StandardKorrektur mit Hilfe des Programms LASERCAL, das von der Anmelderin der vorliegenden Erfindung für diese Zwecke angeboten wird. Schließlich erfolgt im Schritt 80 die Ausgabe der korrigierten Positionswerte X, Y, Z.

In einer bevorzugten Variante dieses Ausführungsbeispiels wird vor der Durchführung der Standardkorrektur im Schritt 78 auch noch die X-Position des Tastkopfes 26 unter Verwendung des dynamischen Differenzwertes bzw. des daraus abgeleiteten dynamischen Korrekturwertes $\Delta X$ bestimmt.

Das vorstehend beschriebene Verfahren zur Bestimmung der Raumkoordinaten des Messpunktes 42 kann grundsätzlich bei Koordinatenmessgeräten mit nur einem Antrieb für das Portal 14 durchgeführt werden, vor allem aber auch bei Koordinatenmessgeräten mit zwei getrennten Antrieben für die Portalfüße 16, 18. Im letztgenannten Fall wird der dynamische Differenzwert vorteilhafterweise auch dazu verwendet, um die beiden Portalfüße 16, 18 möglichst synchron anzutreiben. Alternativ hierzu kann eine solche Steuerung der Antriebe auch ohne die zuvor beschriebene Messwertkorrektur erfolgen.

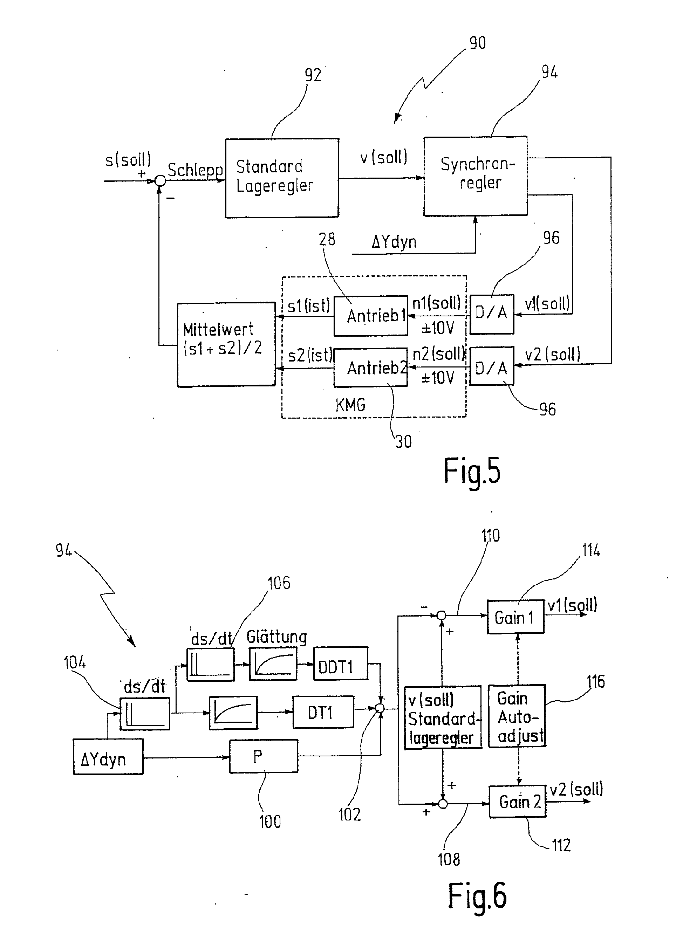

In einem bevorzugten Ausführungsbeispiel erfolgt die Lageregelung mit einem zweistufigen, gemeinsamen Regler 90, wie er in Fig. 5 schematisch dargestellt ist. Der gemeinsame Regler 90 beinhaltet einen Lageregler 92, dem ein Synchronregler 94 nachgeschaltet ist. Der Lageregler 92 ist ein Standard-Lageregler für eine Bewegungsachse, wie er auch bei einem Koordinatenmessgerät mit nur einem Antrieb für die Y-Richtung verwendet werden kann. Er regelt die Lage des Portals 14 hier jedoch nicht entlang der Bewegungsachse des einen Antriebes, sondern entlang einer fiktiven Antriebsachse, die in der Mitte zwischen den beiden Bewegungsachsen der Antriebe 28, 30 liegt. Der jeweilige Positionsistwert wird daher als Mittelwert der Positionen s1 und s2 an den beiden Achsen vorgegeben. Der Positionssollwert $s_{(soll)}$ kommt in an sich bekannter Weise von der Steuereinheit 44 des Koordinatenmessgerätes 10.

Der Lageregler 92 erzeugt in Abhängigkeit von der Differenz zwischen der Sollposition $s_{(soll)}$ und der (gemittelten) IstPosition $s_{(ist)}$ einen Vorgabewert für die Geschwindigkeit der beiden Antriebe 28, 30. Der Vorgabewert $v_{(soll)}$ ist dem Synchronregler 94 zugeführt. Außerdem erhält der Synchronregler 94 den dynamischen Differenzwert $\Delta Y$dyn. Aus diesen beiden Größe erzeugt der Synchronregler 94 zwei Geschwindigkeits-Vorgabesignale $v1_{(soll)}$ und $v2_{(soll)}$, die über jeweils einen Digital-Analog-Wandler 96 den beiden Antrieben 28, 30 zugeführt sind. Die Antriebe 28, 30 erhalten damit eine Sollvorgabe für die Drehzahl und stellen eine entsprechende Drehzahl ein. Diese führt in bekannter Weise zu einer Positionsverschiebung der Portalfüße 16, 18, welche anschließend über die Maßstäbe 32, 34 erfasst wird. Aus den erhaltenen Messwerten wird zum einen der dynamische Differenzwert $\Delta Y$dyn berechnet und gegebenenfalls zur Korrektur der erhaltenen Messwerte verwendet (vgl. Fig. 4 oben). Außerdem wird ein mittlerer Ist-Positionswert bestimmt und als fiktiver Ist-Positionswert dem Standard-Lageregler 92 zugeführt.

Fig. 6 zeigt ein bevorzugtes Ausführungsbeispiel für den Aufbau des Synchronreglers 94. Der Synchronregler 94 erhält den dynamischen Differenzwert $\Delta Y$dyn als Eingangsgröße. Er führt den dynamischen Differenzwert $\Delta Y$dyn in einem ersten Zweig über ein Proportionalglied 100 einem Summationspunkt 102 zu. In einem zweiten Zweig differenziert der Synchronregler 94 den erhaltenen dynamischen Differenzwert $\Delta Y$dyn mit Hilfe eines Differenziergliedes 104, und er führt den differenzierten Ausgangswert ebenfalls dem Summationspunkt 102 zu. In einem dritten Zweig wird der differenzierte Wert ein zweites Mal differenziert (Differenzierglied 106) und dem Summationspunkt 102 zugeführt. Am Summationspunkt 102 erhält man damit einen Stellwert, der sowohl einen Proportionalanteil als auch einen einfach und zweifach nach der Zeit differenzierten Differentialanteil aufweist. Die Anteile können über Faktoren P, DT1 und DDT1 gewichtet werden. Außerdem können die Ausgangswerte der Differenzierglieder 104, 106 noch über ein Glättungsglied geglättet werden. Eine Erhöhung des P-Faktors führt zu kleineren dynamischen Differenzwerten, jedoch zu einer zunehmenden Schwingneigung. Mit Hilfe der Faktoren DT1 und DDT1 kann die Schwingneigung des Synchronreglers reduziert werden.

Die sich am Summationspunkt 102 ergebende Stellgröße wird den Geschwindigkeits-Sollvorgaben des Standard-Lagereglers 92 in einem ersten Zweig 108 additiv überlagert. In einem zweiten Zweig 110 wird die Stellgröße vom Summationspunkt 102 dem Geschwindigkeits-Vorgabewert des Standard-Lagereglers 92 subtraktiv überlagert. Die so erhaltenen Stellgrößen werden jeweils einer Endstufe 112, 114 zugeführt, welche die Geschwindigkeits-Vorgabewerte für die beiden Antriebe 28, 30 erzeugen. Um unterschiedliche Verstärkungsfaktoren der Endstufen 112, 114 zu kompensieren, ist in einem Ausführungsbeispiel ein automatischer Abgleich 116 vorgesehen. Hierbei integriert der Regler eine bei höherer Konstantgeschwindigkeitsfahrt auftretende dynamische Differenz auf die Verstärkungsfaktoren auf. Damit wird der dynamische Differenzwert im Mittel gleich null.

In einem weiteren Ausführungsbeispiel kann der Regler unterschiedliche Verstärkungsfaktoren für positive und negative Fahrt verwalten. Hierdurch lassen sich unterschiedliche Werte abhängig von der Bewegungsrichtung des Portals 14 kompensieren.

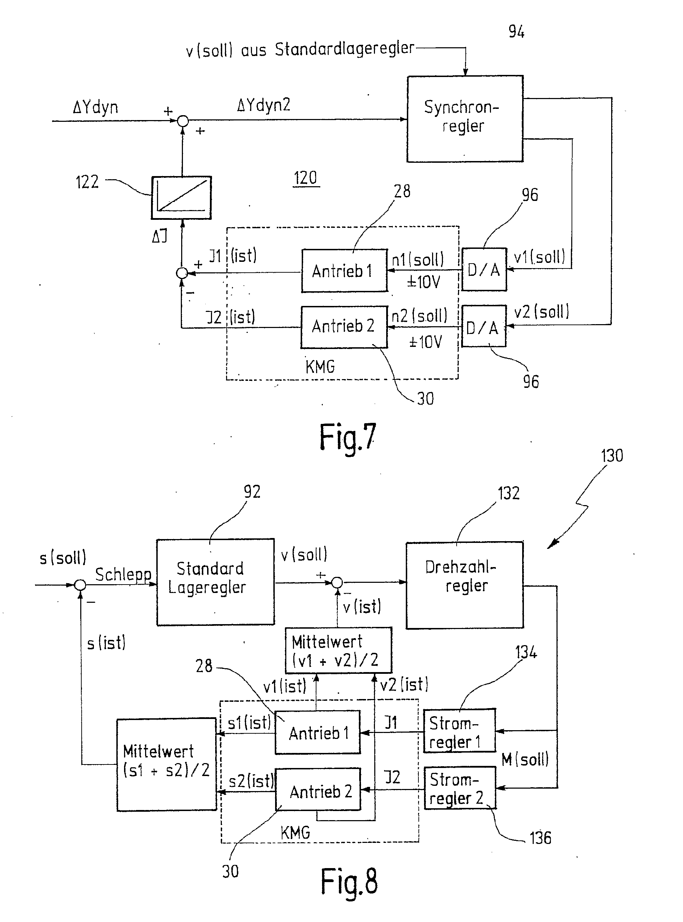

Fig. 7 zeigt eine vorteilhafte Ergänzung des gemeinsamen Reglers 90 aus Fig. 5. Die Ergänzung beinhaltet einen weiteren Regelkreis 120, der jedoch nicht an die Stelle des in Fig. 5 gezeigten Regelkreises tritt, sondern diesen ergänzt. Der weitere Regelkreis 120 misst die Antriebsströme $I1_{(ist)}$ und $I2_{(ist)}$ der beiden Antriebe 28, 30 und bildet daraus einen Differenzstrom $\Delta I$. Der Differenzstrom $\Delta I$ wird über einen Integrierer 122 aufintegriert, und der erhaltene Wert wird zu dem dynamischen Differenzwert $\Delta Ydyn$ addiert. Damit erhält man einen korrigierten dynamische Differenzwert $\Delta Ydyn2$, der anstelle des nichtkorrigierten dynamischen Differenzwertes $\Delta Ydyn$ dem Synchronregler 94 zugeführt ist. Der Synchronregler 94 arbeitet im übrigen genauso, wie anhand Fig. 6 erläutert.

Der Vorteil des gemäß Fig. 7 ergänzten Reglers 90 macht sich bemerkbar, wenn sich im Laufe der Zeit Änderungen an den Messvorrichtungen des Koordinatenmessgerätes 10 einstellen, die zu einem (weiteren) statischen Differenzwertanteil führen. Ohne die Ergänzung gemäß Fig. 7 würde der gemeinsame Regler 90 stetig versuchen, einen solchen weiteren Differenzwertanteil auszugleichen, was jedoch die Führungen des Koordinatenmessgerätes 10 belasten würde. Indem man den korrigierten dynamischen Differenzwert $\Delta Ydyn2$ verwendet, lässt sich dieses unerwünschte Ergebnis vermeiden. Der Integrierer 122 sorgt dafür, dass sich in beiden Antrieben ein Antriebsstrom von in etwa gleicher Höhe einstellt. Mit anderen Worten führt der Regelkreis 120 dazu, dass der Differenzstrom $\Delta I$ im Mittel Null wird.

Besonders vorteilhaft ist es, wenn der korrigierte dynamische Differenzwert $\Delta Ydyn2$ im Verfahrensschritt 74 gemäß Fig. 4 auch zur Korrektur der aufgenommenen Positionswerte verwendet wird. Hierdurch wird eine noch höhere Genauigkeit bei der Bestimmung der Raumkoordinate erreicht.

Besonders vorteilhaft ist es ferner, wenn der Integrierer 122 eine einstellbare Verstärkung $K_I$ besitzt, so dass die Geschwindigkeit des Regelkreises 120 variiert werden kann. Mit einer hohen Integrationsverstärkung $K_I$ lässt sich das Koordinatenmessgerät 10 beim Ausrichten automatisch auf einen zwangsfreien Bewegungsablauf einrichten, indem man das Portal 14 direkt nach der Kalibrierungsfahrt auf kurzen Wegen einige Male vor- und zurückfährt. Der korrigierte dynamische Differenzwert $\Delta Ydyn2$ passt sich dabei automatisch auf einen Wert an, der eine zwangsfreie Bewegung der beiden Portalfüße 16, 18 ermöglicht. Für den eigentlichen Messbetrieb wird die Integrationsverstärkung $K_I$ reduziert oder sogar ausgeschaltet, so dass im wesentlichen oder nur der aufintegrierte Differenzstrom zur Korrektur des dynamischen Differenzwertes verwendet wird. Hierdurch erfolgt eine langsame Adaption an entsprechende Veränderungen des Koordinatenmessgerätes 10.

Fig. 8 zeigt ein weiteres bevorzugtes Ausführungsbeispiel für einen gemeinsamen Regler 130. Gleiche Bezugszeichen bezeichnen dabei dieselben Elemente wie zuvor.

Der Regler 130 beinhaltet ebenfalls einen Standard-Lageregler 92, der einen Positionssollwert $s_{(soll)}$ von der Steuereinheit 44 des Koordinatenmessgerätes 10 erhält. Er erhält ferner einen Positionsistwert $s_{(ist)}$ als Mittelwert der Position s1 und s2 der beiden Portalfüße 16 und 18. Hieraus erzeugt der Standard-Lageregler 92 einen Vorgabewert $v_{(soll)}$, der nun jedoch einem Drehzahlregler 132 zugeführt ist. Der Vorgabewert $v_{(soll)}$ gibt eine Sollgeschwindigkeit der beiden Antriebe 28, 30 vor, die der Standard-Lageregler aus der Positionsvorgabe berechnet. Der Drehzahlregler 132 erhält den Geschwindigkeitssollwert jedoch nicht direkt, sondern reduziert um die mittlere Ist-Geschwindigkeit $v_{(ist)}$, die sich als Mittelwert der Geschwindigkeiten v1 und v2 der beiden Antriebe 28, 30 ergibt. Der Drehzahlregler 132 erzeugt hieraus einen Drehmomentsollwert $M_{(soll)}$, der zwei getrennten Stromreglern 134, 136 zugeführt ist. Die Stromregler 134, 136 bilden hieraus die Antriebsströme für die beiden Antriebe 28, 30. Aufgrund dieser Anordnung ergibt sich für beide Antriebe 28, 30 stets die gleiche Vorschubkraft. Zwangskräfte können in diesem Fall prinzipiell nicht auftreten, wenn die beiden Portalfüße 16, 18 hinreichend starr miteinander gekoppelt sind.

Der gemeinsame Drehzahlregler 132 kann entweder digital oder analog aufgebaut sein. Im Falle eines digitalen Drehzahlreglers wird die mittlere Ist-Geschwindigkeit aus den differenzierten Positionssignalen s1 und s2 der Antriebe 28, 30 gewonnen. Im Falle eines analogen Drehzahlreglers werden die jeweiligen Tachosignale analog gemittelt.

**Patentansprüche**

1. Verfahren zum Bestimmen von zumindest einer Raumkoordinate eines Messpunktes (42) an einem Messobjekt (40), mit den Schritten:

  - Anfahren (66) des Messpunktes (42) mit einem Tastkopf (26), der an einer Verschiebemechanik (14) angeordnet ist, die ein erstes und ein zweites verfahrbares Auflager (16, 18) aufweist,
  - Bestimmen (68) einer ersten Verschiebeposition ($Y_I$) des ersten Auflagers (16) und einer zweiten Verschie-

beposition ($Y_r$) des zweiten Auflagers (18),

- Bestimmen (72) einer Istdifferenz ($\Delta Y$) zwischen der ersten und zweiten Verschiebeposition ($Y_l$, $Y_r$), und
- Bestimmen der Raumkoordinate des Messpunktes (42) unter Verwendung der Istdifferenz ($\Delta Y$),
- wobei ein statischer Differenzwert ($\Delta Ystat$) bereitgestellt wird (64), der einen reproduzierbaren Differenzanteil zwischen der ersten und der zweiten Verschiebeposition ($Y_l$, $Y_r$) repräsentiert,
- wobei der statische Differenzwert ($\Delta Ystat$) von der Istdifferenz ($\Delta Y$) subtrahiert wird (74), um einen dynamischen Differenzwert ($\Delta Ydyn$) zu erhalten, und
- wobei die Raumkoordinate unter Verwendung des dynamischen Differenzwertes ($\Delta Ydyn$) bestimmt wird (76), **dadurch gekennzeichnet, dass** der statische Differenzwert ($\Delta Ystat$) mit Hilfe einer Kalibrierungsfahrt bestimmt (62) und anschließend in einem Speicher (52) dauerhaft bereitgestellt wird (64), und dass die unter Verwendung des dynamischen Differenzwertes ($\Delta Ydyn$) bestimmte Raumkoordinate anschließend unter Verwendung des statischen Differenzwertes ($\Delta Ystat$) korrigiert wird (78).

2. Verfahren nach Anspruch 1, **dadurch gekennzeichnet, dass** die Auflager (16, 18) beim Anfahren des Messpunktes (42) weitgehend parallel in einer ersten Raumrichtung (Y) verfahren werden und dass der Tastkopf (26) beim Anfahren des Messpunktes (42) außerdem in einer zweiten, die Auflager (16, 18) verbindenden Raumrichtung (X) verfahren wird, wobei die Raumkoordinate sowohl in der ersten Raumrichtung (Y) als auch in der zweiten Raumrichtung (X) unter Verwendung des dynamischen Differenzwertes ($\Delta Ydyn$) bestimmt wird (76, 82).

3. Verfahren nach Anspruch 1 oder 2, **dadurch gekennzeichnet, dass** der statische Differenzwert ($\Delta Ystat$) mit einer Kalibrierungsfahrt ohne Messwertkorrekturen bestimmt wird (58).

4. Verfahren nach einem der Ansprüche 1 bis 3, **dadurch gekennzeichnet, dass** das Anfahren des Messpunktes (42) mit Hilfe von zumindest zwei Antrieben (28, 30) erfolgt, wobei ein erster Antrieb (30) das erste Auflager (16) bewegt und wobei ein zweiter Antrieb (28) das zweite Auflager (18) bewegt, wobei die Kalibrierungsfahrt jedoch mit nur einem der Antriebe durchgeführt wird (60).

5. Verfahren nach einem der Ansprüche 1 bis 4, **dadurch gekennzeichnet, dass** die erste und die zweite Verschiebeposition ($Y_l$, $Y_r$) mit Hilfe von temperaturkorrigierten Messeinrichtungen bestimmt werden (70).

6. Verfahren nach einem der Ansprüche 1 bis 5, **dadurch gekennzeichnet, dass** das Anfahren des Messpunktes (42) mit Hilfe von zumindest zwei Antrieben (28, 30) erfolgt, wobei ein erster Antrieb (30) das erste Auflager (16) bewegt, wobei ein zweiter Antrieb (28) das zweite Auflager (18) bewegt, und wobei die beiden Antriebe (28, 30) von einem gemeinsamen Regler (90) angesteuert werden, der den dynamischen Differenzwert ($\Delta Ydyn$) als Eingangsgröße erhält.

7. Verfahren nach Anspruch 6, **dadurch gekennzeichnet, dass** der erste und zweite Antrieb (28, 30) abgeschaltet werden, wenn der dynamische Differenzwert ($\Delta Ydyn$) einen definierten Schwellenwert überschreitet.

8. Verfahren nach Anspruch 6 oder 7, **dadurch gekennzeichnet, dass** der gemeinsame Regler (90) einen gemeinsamen Lageregler (92) und einen Synchronregler (94) beinhaltet, der dem Lageregler (92) nachgeordnet ist, wobei der dynamische Differenzwert ($\Delta Ydyn$) dem Synchronregler (94) als Eingangsgröße zugeführt wird.

9. Verfahren nach einem der Ansprüche 6 bis 8, **dadurch gekennzeichnet, dass** ein Antriebsstrom für den ersten und den zweiten Antrieb (28, 30) auf einen definierten Maximalwert begrenzt wird, wobei der definierte Maximalwert vorzugsweise etwa gleich dem für eine Beschleunigung der Portalfüße (16, 18) benötigten Stromwert ist.

10. Verfahren nach einem der Ansprüche 6 bis 9, **dadurch gekennzeichnet, dass** der gemeinsame Regler (90) den ersten und den zweiten Antrieb (28, 30) so ansteuert, dass sich in beiden Antrieben (28, 30) ein Antriebsstrom von in etwa derselbe Höhe einstellt.

11. Koordinatenmessgerät zum Bestimmen von zumindest einer Raumkoordinate eines Messpunktes (42) an einem Messobjekt (40), mit

- einem Tastkopf (26) zum Anfahren des Messpunktes (42), wobei der Tastkopf (26) an einer Verschiebemechanik (14) angeordnet ist, die ein erstes (16) und ein zweites (18) verfahrbares Auflager aufweist,
- einer ersten und einer zweiten Messeinrichtung (32, 34) zum Bestimmen einer ersten Verschiebeposition ($Y_l$) des ersten Auflagers (16) und einer zweiten Verschiebeposition ($Y_r$) des zweiten Auflagers (18),

- einer Istdifferenzbildungseinheit (48, 72) zum Bestimmen einer Istdifferenz ($\Delta$Y) zwischen der ersten und zweiten Verschiebeposition ($Y_l$, $Y_r$), und

- einem Speicher (52) zum dauerhaften Abspeichern und Bereitstellen eines statischen Differenzwertes ($\Delta$Ystat), der einen reproduzierbaren Differenzanteil zwischen der ersten und zweiten Verschiebeposition ($Y_l$, $Y_r$) repräsentiert,

- einem Subtrahierer (48, 74) zum Subtrahieren des statischen Differenzwertes ($\Delta$Ystat) von der Istdifferenz ($\Delta$Y), um einen dynamischen Differenzwert ($\Delta$Ydyn) zu erhalten, und

- einer Berechnungseinheit (48, 76, 78, 82) zum Bestimmen der Raumkoordinate des Messpunktes unter Verwendung der Istdifferenz ($\Delta$Y),

- wobei der Subtrahierer (48, 74) dazu ausgebildet ist, den dynamischen Differenzwert ($\Delta$Ydyn) der Berechnungseinheit (48, 76, 82) zum Bestimmen der Raumkoordinate zuzuführen,

**dadurch gekennzeichnet, dass** die Berechnungseinheit dazu ausgebildet ist, die unter Verwendung des dynamischen Differenzwertes ($\Delta$Ydyn) bestimmte Raumkoordinate anschließend unter Verwendung des statischen Differenzwertes ($\Delta$Ystat) zu korrigieren, wobei der statische Differenzwert mit Hilfe einer Kalibrierungsfahrt bestimmt (62) und anschließend in dem Speicher dauerhaft bereitgestellt ist (64).

12. Computerprogrammprodukt mit Programmcode zum Ausführen eines Verfahrens nach einem der Ansprüche 1 bis 10, wenn der Programmcode in einen Arbeitsspeicher (50) eines Koordinatenmessgerätes (10) geladen wird.

**Claims**

1. Method for determining at least one space coordinate of a measurement point (42) on an object (40) to be measured, having the steps:

- approaching (66) the measuring point (42) with a sampling head (26) which is arranged on a displacement mechanism (14), which comprises a first and a second movable support (16, 18),
- determining (68) a first displacement position ($Y_l$) of the first support (16) and a second displacement position ($Y_r$) of the second support (18),
- determining (72) an actual difference ($\Delta$Y) between the first and second displacement positions ($Y_l$, $Y_r$), and
- determining the space coordinate of the measurement point (42) by using the actual difference ($\Delta$Y),
- wherein a static difference value ($\Delta$Ystat) is provided (64), which represents a reproducible difference component between the first and second displacement positions ($Y_l$, $Y_r$),
- wherein the static difference value ($\Delta$Ystat) is subtracted (74) from the actual difference ($\Delta$Y) in order to obtain a dynamic difference value ($\Delta$Ydyn), and
- wherein the space coordinate is determined (76) by using the dynamic difference value ($\Delta$Ydyn),

**characterized in that** the static difference value ($\Delta$Ystat) is determined with the aid of a calibration run (62) and subsequently provided permanently (64) in a memory (52), and **in that** the space coordinate determined by using the dynamic difference value ($\Delta$Ydyn) is subsequently corrected (78) by using the static difference value ($\Delta$Ystat).

2. Method according to Claim 1, **characterized in that** the supports (16, 18) are moved substantially parallel in a first space direction (Y) when approaching the measurement point (42) and **in that** the sampling head (26) is furthermore moved in a second space direction (X), connecting the supports (16, 18), when approaching the measurement point (42), the space coordinate being determined (76, 82) both in the first space direction (Y) and in the second space direction (X) by using the dynamic difference value ($\Delta$Ydyn).

3. Method according to Claim 1 or 2, **characterized in that** the static difference value ($\Delta$Ystat) is determined (58) by a calibration run without measurement value corrections.

4. Method according to one of Claims 1 to 3, **characterized in that** the measurement point (42) is approached with the aid of at least two drives (28, 30), a first drive (30) moving the first support (16) and a second drive (28) moving the second support (18), but the calibration run being carried out (60) with only one of the drives.

5. Method according to one of Claims 1 to 4, **characterized in that** the first and second displacement positions ($Y_l$, $Y_r$) are determined with the aid of temperature-corrected measuring instruments (70).

6. Method according to one of Claims 1 to 5, **characterized in that** the measurement point (42) is approached with the aid of at least two drives (28, 30), a first drive (30) moving the first support (16), a second drive (28) moving the second support (18) and the two drives (28, 30) being actuated by a common regulator (90) which receives the dynamic difference value ($\Delta$Ydyn) as an input quantity.

7. Method according to Claim 6, **characterized in that** the first and second drives (28, 30) are switched off when the dynamic difference value ($\Delta$Ydyn) exceeds a defined threshold value.

8. Method according to Claim 6 or 7, **characterized in that** the common regulator (90) contains a common rotary position regulator (92) and a synchronous regulator (94), which is subordinated to the position regulator (92), the dynamic difference value ($\Delta$Ydyn) being supplied to the synchronous regulator (94) as an input quanti-ty.

9. Method according to one of Claims 6 to 8, **characterized in that** a drive current for the first and second drives (28, 30) is limited to a defined maximum value, the defined maximum value preferably being approximately equal to the current value needed for an acceleration of the portal feet (16, 18).

10. Method according to one of Claims 6 to 9, **characterized in that** the common regulator (90) actuates the first and second drives (28, 30) so that a drive current of approximately the same level is set up in both drives (28, 30).

11. Coordinate measuring device for determining at least one space coordinate of the measurement point (42) on an object (40) to be measured, having

    - a sampling head (26) for approaching the measuring point (42), the sampling head (26) being arranged on a displacement mechanism (14) which comprises a first (16) and a second movable support (18),
    - a first and a second measuring instrument (32, 34) for determining a first displacement position ($Y_l$) of the first support (16) and a second displacement position ($Y_r$) of the second support (18),
    - an actual difference formation unit (48, 72) for determining an actual difference ($\Delta$Y) between the first and second displacement positions ($Y_l$, $Y_r$), and
    - a memory (52) for permanently storing and providing a static difference value ($\Delta$Ystat), which represents a reproducible difference component between the first and second displacement positions ($Y_l$, $Y_r$),
    - a subtractor (48, 74) for subtracting the static difference value ($\Delta$Ystat) from the actual difference ($\Delta$Y), in order to obtain a dynamic difference value ($\Delta$Ydyn), and
    - a calculation unit (48, 76, 78, 82) for determining the space coordinate of the measurement point by using the actual difference ($\Delta$Y),
    - wherein the subtractor (48, 74) is designed to supply the dynamic difference value ($\Delta$Ydyn) to the calculation unit (48, 76, 82) in order to determine the space coordinate,
    **characterized in that** the calculation unit is designed subsequently to correct the space coordinate, determined by using the dynamic difference value (DYdyn), by using the static difference value (DYstat), wherein the static difference value is determined with the aid of a calibration run (62) and subsequently provided permanently (64) in the memory.

12. Computer program product having program code for carrying out a method according to one of Claims 1 to 10 when the program code is loaded into a working memory (50) of a coordinate measuring device (10).

**Revendications**

1. Procédé de détermination d'au moins une coordonnée spatiale d'un point de mesure (42) sur un objet mesuré (40), comprenant les étapes suivantes :

    - approche (66) du point de mesure (42) avec une tête de palpage (26) qui est montée sur un mécanisme de déplacement (14), lequel possède un premier et un deuxième coussinet mobile (16, 18),
    - détermination (68) d'une première position de décalage ($Y_l$) du premier coussinet (16) et d'une deuxième position de décalage ($Y_r$) du deuxième coussinet (18),
    - détermination (72) d'une différence réelle (Y) entre la première et la deuxième position de décalage ($Y_l$, $Y_r$), et
    - détermination de la coordonnée spatiale du point de mesure (42) en utilisant la différence réelle ($\Delta$Y),
    - une valeur différentielle statique ($\Delta$stat) étant fournie (64), laquelle représente une part de différence reproductible entre la première et la deuxième position de décalage ($Y_l$, $Y_r$),
    - la valeur différentielle statique ($\Delta$Ystat) étant soustraite (74) de la différence réelle ($\Delta$Y) afin d'obtenir une valeur différentielle dynamique (ΔYdyn), et

- la coordonnée spatiale étant déterminée (76) en utilisant la valeur différentielle dynamique (ΔYdyn), **caractérisé en ce que** la valeur différentielle statique (ΔYstat) est déterminée (62) à l'aide d'une course d'étalonnage et ensuite fournie de manière permanente (64) dans une mémoire (52), et **en ce que** la coordonnée spatiale déterminée en utilisant la valeur différentielle dynamique (ΔYdyn) est ensuite corrigée (78) en utilisant la valeur différentielle statique (ΔYstat).

2. Procédé selon la revendication 1, **caractérisé en ce que** les coussinets (16, 18), lors de l'approche du point de mesure (42), sont, à quelques détails près, déplacés en parallèle dans une première direction dans l'espace (Y) et **en ce que** la tête de palpage (26), lors de l'approche du point de mesure (42), est en plus déplacée dans une deuxième direction dans l'espace (X) reliant les coussinets (16, 18), la coordonnée spatiale étant déterminée (76, 82) à la fois dans la première direction dans l'espace (Y) et dans la deuxième direction dans ['espace (X) en utilisant la valeur différentielle dynamique (ΔYdyn).

3. Procédé selon la revendication 1 ou 2, **caractérisé en ce que** la valeur différentielle statique (ΔYstat) est déterminée (58) avec une course d'étalonnage sans corrections de la valeur mesurée.

4. Procédé selon l'une des revendications 1 à 3, **caractérisé en ce que** l'approche du point de mesure (42) s'effectue à l'aide d'au moins deux mécanismes d'entraînement (28, 30), un premier mécanisme d'entraînement (30) déplaçant le premier coussinet (16) et un deuxième mécanisme d'entraînement (28) déplaçant le deuxième coussinet (18), la course d'étalonnage n'étant cependant effectuée (60) qu'avec un seul des mécanismes d'entraînement.

5. Procédé selon l'une des revendications 1 à 4, **caractérisé en ce que** la première et la deuxième position de décalage ($Y_l$, $Y_r$) sont déterminées (70) à l'aide de dispositifs de mesure corrigés en température.

6. Procédé selon l'une des revendications 1 à 5, **caractérisé en ce que** l'approche du point de mesure (42) s'effectue à l'aide d'au moins deux mécanismes d'entraînement (28, 30), un premier mécanisme d'entraînement (30) déplaçant le premier coussinet (16) et un deuxième mécanisme d'entraînement (28) déplaçant le deuxième coussinet (18), et les deux mécanismes d'entraînement (28, 30) étant commandés par un régulateur commun (90) qui obtient la valeur différentielle dynamique (ΔYdyn) en tant que grandeur d'entrée.

7. Procédé selon la revendication 6, **caractérisé en ce que** le premier et le deuxième mécanisme d'entraînement (28, 30) sont mis hors circuit lorsque la valeur différentielle dynamique (ΔYdyn) dépasse une valeur de seuil définie.

8. Procédé selon la revendication 6 ou 7, **caractérisé en ce que** le régulateur commun (90) contient un régulateur de position commun (92) et un régulateur synchrone (94) qui est monté à la suite du régulateur de position (92), la valeur différentielle dynamique (ΔYdyn) étant acheminée au régulateur synchrone (94) en tant que grandeur d'entrée.

9. Procédé selon l'une des revendications 6 à 8, **caractérisé en ce qu'**un courant d'entraînement pour le premier et le deuxième mécanisme d'entraînement (28, 30) est limité à une valeur maximale définie, la valeur maximale définie étant de préférence approximativement égale à la valeur du courant nécessaire pour une accélération des pieds du portique (16, 18).

10. Procédé selon l'une des revendications 6 à 9, **caractérisé en ce que** le régulateur commun (90) commande le premier et le deuxième mécanisme d'entraînement (28, 30) de telle sorte qu'un courant d'entraînement ayant approximativement la même intensité s'établit dans les deux mécanismes d'entraînement (28, 30).

11. Appareil de mesure de coordonnées destiné à déterminer au moins une coordonnée spatiale d'un point de mesure (42) sur un objet mesuré (40), comprenant

- une tête de palpage (26) destinée à être approchée du point de mesure (42), la tête de palpage (26) étant montée sur un mécanisme de déplacement (14), lequel possède un premier (16) et un deuxième (18) coussinet mobile,
- un premier et un deuxième dispositif de mesure (32, 34) destinés à déterminer une première position de décalage ($Y_l$) du premier coussinet (16) et une deuxième position de décalage ($Y_r$) du deuxième coussinet (18),
- une unité de formation de différence réelle (48, 72) destinée à déterminer une différence réelle (ΔY) entre la première et la deuxième position de décalage ($Y_l$, $Y_r$), et
- une mémoire (52) destinée à enregistrer et à fournir de manière permanente une valeur différentielie statique

($\Delta$Ystat), laquelle représente une part de différence reproductible entre la première et la deuxième position de décalage ($Y_l$, $Y_r$),

- un soustracteur (48, 74) destiné à soustraire la valeur différentielle statique ($\Delta$Ystat) de la différence réelle ($\Delta$Y) afin d'obtenir une valeur différentielle dynamique ($\Delta$Ydyn), et

- une unité de calcul (48, 76, 78, 82) destinée à déterminer la coordonnée spatiale du point de mesure en utilisant la différence réelle ($\Delta$Y),

- le soustracteur (48, 74) étant confiiguré pour acheminer la valeur différentielle dynamique ($\Delta$Ydyn) à l'unité de calcul (48, 76, 82) afin de déterminer la coordonnée spatiale,

**caractérisé en ce que** l'unité de calcul est configurée pour corriger ensuite la coordonnée spatiale déterminée en utilisant la valeur différentielle dynamique en utilisant la valeur différentielle statique ($\Delta$Ystat), la valeur différentielle statique ($\Delta$Ystat) étant déterminée (62) à l'aide d'une course d'étalonnage et ensuite fournie de manière permanente (64) dans la mémoire.

12. Produit de programme informatique comprenant un code de programme pour mettre en oeuvre un procédé selon l'une des revendications 1 à 10 lorsque le code de programme est chargé dans une mémoire de travail (50) d'un appareil de mesure de coordonnées (10).

Fig.1

Fig.2

Fig.3

Start

Anfahren Messpunkt — 66

Einlesen Yr, Yl, X, Z — 68

Temperaturkompensation — 70

$\Delta Y = Yr - Yl$ — 72

$\Delta Ydyn = \Delta Y - \Delta Ystat$ — 74

Korrektur von Yr anhand $\Delta Ydyn$ — 76

Korrektur von X anhand von $\Delta Ydyn$ — 82

Standard CAA für X, Y, Z — 78

Messwertausgabe X, Y, Z — 80

Ende

Fig.4

Fig.5

Fig.6

v (soll) aus Standardlageregler ⎯⎯⎯⎯⎯⎯ 94

ΔYdyn ⟶ + ⊕ + ⟶ ΔYdyn2 ⟶ [ Synchron-regler ]

122 ⟶ [◱] ΔJ    120        28        96

J1 (ist) ⟵ [ Antrieb 1 ] ⟵ n1 (soll) ±10V ⟵ [ D/A ] ⟵ v1 (soll)

J2 (ist) ⟵ [ Antrieb 2 ] ⟵ n2 (soll) ±10V ⟵ [ D/A ] ⟵ v2 (soll)

KMG        30        96

## Fig.7

92                    132        130

s (soll) ⟶ ⊕ Schlepp ⟶ [ Standard Lageregler ] ⟶ v (soll) ⟶ ⊕ + − ⟶ [ Drehzahl-regler ]

s (ist)

Mittelwert (v1 + v2)/2

28    v1 (ist)    v2 (ist)    134

[ Mittelwert (s1 + s2)/2 ] ⟵ s1 (ist) [ Antrieb 1 ] J1 ⟵ [ Strom-regler 1 ]

s2 (ist) [ Antrieb 2 ] J2 ⟵ [ Strom-regler 2 ] M (soll)

KMG        30        136

## Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5333386 A
- DE 10214490 A1
- DE 2248194 B2
- EP 0309094 A1
- DE 2950926 A1